Europäisches Patentamt

European Patent Office

Office européen des brevets

(11) Veröffentlichungsnummer: **0 228 986**
**A1**

## (12) EUROPÄISCHE PATENTANMELDUNG

(21) Anmeldenummer: **86730197.0**

(22) Anmeldetag: **01.12.86**

(51) Int. Cl.⁴: **G 02 B 6/32**
**G 02 B 6/38**

(30) Priorität: **06.12.85 DE 3543622**

(43) Veröffentlichungstag der Anmeldung:
**15.07.87 Patentblatt 87/29**

(84) Benannte Vertragsstaaten:
**AT CH DE FR GB IT LI SE**

(71) Anmelder: **Siemens Aktiengesellschaft Berlin und München**
**Wittelsbacherplatz 2**
**D-8000 München 2 (DE)**

(72) Erfinder: **Happak, Heinz, Dipl.-Ing. (FH)**
**St.-Martins-Platz 6**
**D-8000 München 90 (DE)**

(54) **Kupplungselement für optische Steckverbinder.**

(57) Die Erfindung bezieht sich auf ein Kupplungselement für optische Steckverbinder mit einer Linse, die im Innern des Kupplungselementes zwischen zwei optischen Steckverbindern liegt.

Um ein solches Kupplungselement so auszugestalten, daß die Verbindung eine minimale optische Dämpfung aufweist, ist die Linse (49) in einem Zentralteil (40) untergebracht, das an seinem einen Ende eine Aufnahme (47) für den einen optischen Steckverbinder aufweist und dort auch an dem Außengehäuse (44) des Kupplungselementes in allen drei Richtungen auslenkbar mittels einer Federanordnung (41, 42) gelagert ist. Das Zentralteil (40) ist von einem Mantelteil (50) umfaßt, das Auslenkorgane (53, 63) trägt. Mit dem Mantelteil (50) ist ein Adapter (71) für den weiteren optischen Steckverbinder verbunden.

FIG.2

**Beschreibung**

Kupplungselement für optische Steckverbinder

Die Erfindung bezieht sich auf ein Kupplungselement für optische Steckverbinder mit einer Linse, die im Innern des Kupplungselementes zwischen der Aufnahme für einen optischen Steckverbinder und der Aufnahme für einen weiteren optischen Steckverbinder liegt.

Bei einem bekannten Kupplungselement dieser Art ("Der Elektroniker", Nr. 9/1985, Seite 56) ist für eine gute optische Kopplung zwischen zwei optischen Steckverbindern durch eine Zentrierlinse und Immersionsöl gesorgt, so daß dieses bekannte Kupplungselement eine verhältnismäßig geringe optische Dämpfung verursacht.

Der Erfindung liegt die Aufgabe zugrunde, ein Kupplungselement für optische Steckverbinder anzugeben, das sich durch eine besonders geringe optische Dämpfung auszeichnet.

Zur Lösung dieser Aufgabe ist bei einem Kupplungselement der eingangs angegebenen Art erfindungsgemäß die Linse in einem Zentralteil untergebracht, das an seinem einen Ende die Aufnahme für den einen optischen Steckverbinder aufweist und dort auch an dem Außengehäuse des Kupplungselementes in allen drei Richtungen auslenkbar mittels einer Federanordnung gelagert ist; das Zentralteil ist von einem Mantelteil umfaßt, das Auslenkorgane für das Zentralteil trägt, und mit dem Mantelteil ist ein Adapter mit der Aufnahme für den weiteren optischen Steckverbinder verbunden.

Ein wesentlicher Vorteil des erfindungsgemäßen Kupplungselementes besteht darin, daß mit ihm eine optische Kopplung von Lichtwellenleitern zweier optischer Steckverbinder unter Erreichung einer nur sehr geringen optischen Dämpfung möglich ist, weil bei dem erfindungsgemäßen Kupplungselement aufgrund der federnden Lagerung des Zentralteiles und der Auslenkorgane am Mantelteil eine genaue Ausrichtung der optischen Steckverbinder bzw. ihrer Lichtwellenleiter zueinander erreichbar ist. Darüberhinaus bietet das erfindungsgemäße Kupplungselement den Vorteil, daß ein optischer Steckverbinder einer bestimmten Ausführung mit unterschiedlich ausgebildeten weiteren optischen Steckverbindern in Verbindung gebracht werden kann, ohne daß das Kupplungselement wesentlich verändert werden muß; es bedarf dann nur des Austauschs eines Adapters gegen einen anderen mit einer Aufnahme entsprechend der konstruktiven Ausführung des jeweiligen weiteren optischen Steckverbinders.

Bei dem erfindungsgemäßen Kupplungselement kann die Federanordnung in unterschiedlicher Weise ausgeführt sein. Als vorteilhaft wird es jedoch angesehen, wenn die Federanordnung aus zwei um 90° gegeneinander versetzt angeordneten, radial auf das Zentralteil wirkenden Federn und einem koaxial zur Längsachse des Zentralteils zwischen diesem und dem Außengehäuse liegenden Federelement besteht, bei dem es sich beispielsweise um einen Gummiring oder eine Tellerfeder handeln kann. Dabei sind die Federn vorteilhafterweise abgebogene Blattfedern, die das Zentralteil außen umgreifen und über zwischengelegte Rollen das Zentralteil gegen radial wirkende Auslenkorgane drücken.

Um eine genaue Position des Zentralteils in einer Ebene quer zur optischen Achse zu erreichen, sind die radial wirkenden Auslenkorgane vorteilhafter Weise Rollen tragende Schrauben, die in schwach zur Längsachse des Zentralkörpers geneigten Bohrungen des Mantelteils geführt sind. Durch diese Lage der Bohrungen läßt sich das Zentralteil sehr genau in eine gewünschte Position in einer Ebene quer zur optischen Achse bringen, wobei diese Position durch optische Dämpfungsmessungen überwacht wird.

Als besonders vorteilhaft hat es sich aus Gründen einer einfachen konstruktiven Ausführung erwiesen, wenn die Federanordnung aus mindestens einem zwischen dem Zentralkörper und dem Außengehäuse angeordneten federnden Element besteht, das in allen Richtungen Federeigenschaften aufweist. Bei einer Ausführung mit einem einzigen federnden Element ist dieses vorteilhafterweise von einem relativ großen, koaxial zur Längsachse des zentralteils angeordneten Gummiring gebildet. Aus fertigungstechnischen Gründen kann es aber auch vorteilhaft sein, mehrere kleine Gummipuffer als federndes Element zu verwenden.

Bei diesem Ausführungsbeispiel mit Gummielementen sind die radial wirkenden Auslenkorgane vorteilhafter Weise Kugel tragende Druckschrauben, die in radial zum Zentralkörper verlaufenden Gewindebohrungen im Mantelteil geführt sind. Besonders vorteilhaft ist es, wenn die Druckschrauben Differentialschrauben sind.

Zur genauen Einstellung des Zentralteiles in Richtung der optischen Achse des erfindungsgemäßen Kupplungselementes ist in eine koaxial zur Längsachse des Zentralteils verlaufende Gewindebohrung des Mantelteils ein Druckteil mit Außengewinde als axial wirkendes Auslenkorgan eingeschraubt, das an einem Flansch des Zentralteils angreift und dieses gegen die Federanordnung drückt.

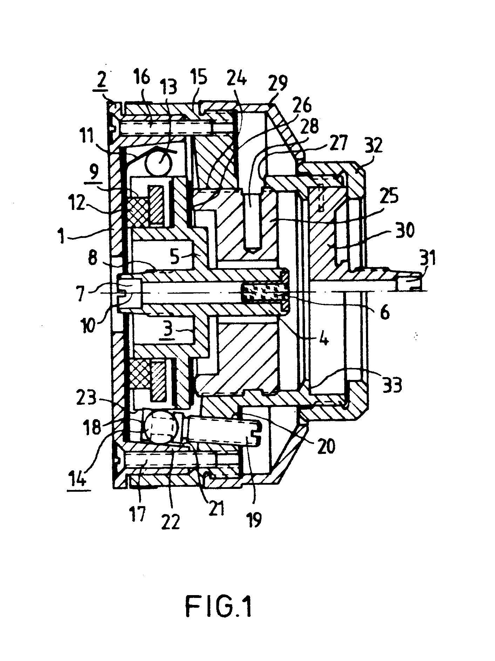

Zur Erläuterung der Erfindung ist in Figur 1 ein Schnitt durch ein Ausführungsbeispiel des erfindungsgemäßen Kupplungselementes und in

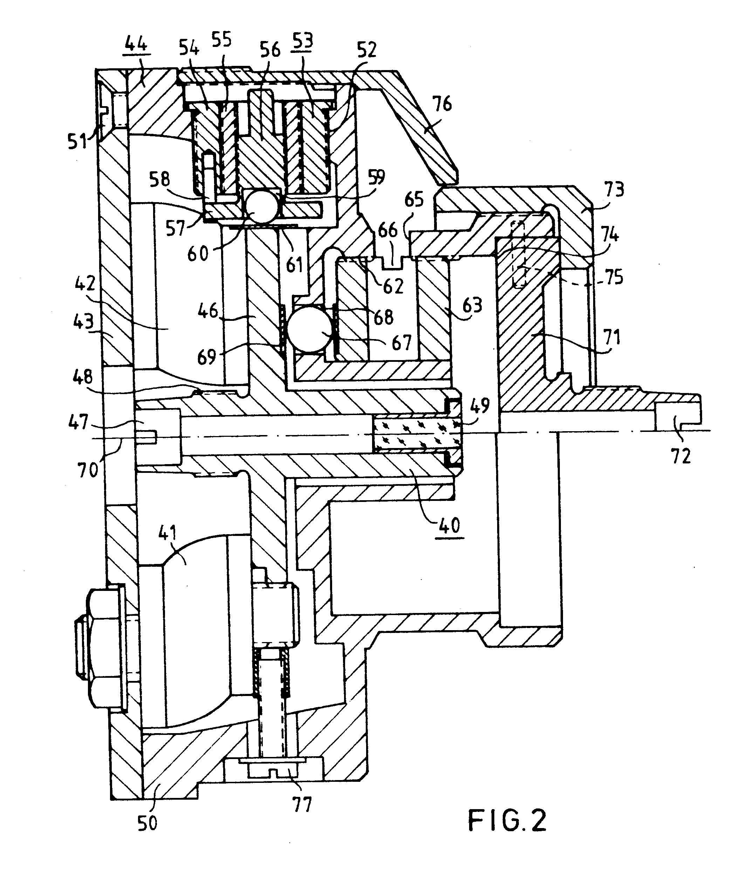

Figur 2 teilweise ein Schnitt und teilweise ein weiterer Schnitt um 45° gedreht auf ein weiteres (etwas vergrößert dargestelltes) Ausführungsbeispiel des erfindungsgemäßen Kupplungselementes wiedergegeben.

Wie Figur 1 erkennen läßt, ist in einem eine Wand 1 aufweisenden Außengehäuse 2 des erfindungsgemäßen Kupplungselementes ein Zentralteil 3 untergebracht, das aus einem Axialteil 4 und einem flanschartigen Ansatz 5 besteht. Am in der Figur 1 rechten Ende des Axialteils 4 ist eine Linse 6 gehalten. An dem von der Linse 6 abgewandten Ende des Axialteils 4 des Zentralteils 3 ist eine Aufnahme 7 für einen nicht dargestellten optischen Steckverbinder vorgesehen, der mit seiner ebenfalls nicht dargestellten Überwurfmutter auf ein Gewinde 8 des Axialteils 4 aufgeschraubt werden kann.

Das Zentralteil 3 ist mittels einer Federanordnung 9 in Richtung der Längsachse 10 des Zentralteils 3 sowie in einer Ebene quer dazu auslenkbar gelagert, indem die Federanordnung 9 aus einer Blattfeder 11, einer weiteren dazu um 90° versetzt angeordneten, nicht erkennbaren weiteren Blattfeder und einem Gummiring 12 besteht. Gegen diesen Gummiring 12 ist das Zentralteil 3, wie später noch im einzelnen beschrieben ist, mittels des Flanschteils 5 gedrückt. Außerdem wirken in einer Ebene quer zur Zeichenebene über Rollen, von denen in der Figur 1 nur die Rolle 13 sichtbar ist, die Blattfedern 11 auf das Zentralteil 1 ein und drücken dieses gegen Auslenkorgane, von denen in der Figur 1 ebenfalls nur ein Auslenkorgan 14 erkennbar ist.

An der Wand 1 des Außengehäuses 2 ist ein Mantelteil 15 durch Schrauben 16 und 17 gehalten. Dieses Mantelteil 15 umfaßt das Zentralteil 3 und dient unter anderem dazu, daß Auslenkorgan 14 aufzunehmen. Dieses besteht aus einer eine Rolle 18 tragenden Schraube 19, die in einer Gewindebohrung 20 im Mantelteil 15 geführt ist. Diese Gewindebohrung 20 hat eine schwache Neigung zur Längsachse 10 des Zentralteils 3. Bei Betätigung der Schraube 19 wird deren Rolle 18 auf einer unter der gleichen Neigung zur Längsachse 10 des Zentralteils 3 verlaufenden Ebene 21 eines Ansatzes 22 der Gehäusewand 1 geführt und drückt dabei entgegen der Wirkung der Blattfeder 11 gegen eine Kante 23 des Zentralteils 3, wodurch letzteres nach oben hin verstellt wird.

Das Mantelteil 15 ist darüberhinaus mit einer Gewindebohrung 24 versehen, in die ein Druckteil 25 mit Außengewinde eingeschraubt ist. Dieses Druckteil 25 hat einen ringförmigen Druckansatz 26, mit dem es sich gegen den Flanschteil 5 des Zentralteils 3 legt. Das Einschrauben des Druckteils 25 geschieht mittels eines nicht dargestellten Schlüssels, der durch eine schlitzartige Öffnung 27 im Mantelteil 15 in zunächst eine von mehreren am Umfang verteilt angeordneten Bohrungen 28 führbar ist und bei einer Bewegung des Schlüssels auf einem Viertelkreis das Druckteil 25 in Richtung der Längsachse 10 des Zentralteils 3 verschiebt.

Das Gehäuse 2 des dargestellten Kupplungselementes wird durch eine Kappe 29 vervollständigt, die außen auf das Mantelteil 15 aufgeschraubt ist.

Ein Adapter 30 mit einer weiteren Aufnahme 31 für einen weiteren, nicht dargestellten optischen Steckverbinder wird in der Weise mit dem Mantelteil 15 verbunden, daß eine Überwurfmutter 32 aufgeschraubt wird und dabei den Adapter gegen einen ringförmigen Ansatz 33 des Mantelteils 15 drückt. Dadurch gelangt der Adapter in eine definierte Lage.

Nach vollständiger Verbindung der nicht dargestellten optischen Steckverbinder miteinander über das Kupplungselement nach Fig. 1 wird durch Betätigen der Druckschrauben 19 bzw. des Druckteils 25 das Zentralteil 3 des dargestellten Kupplungselementes in eine solche Lage zu dem Adapter 30 mit dem weiteren optischen Steckverbinder gebracht, daß eine optimale optische Kopplung gegeben ist; dies wird durch Messung der optischen Dämpfung erreicht.

Bei dem Ausführungsbeispiel nach Figur 2 ist ein Zentralteil 40 über mehrere Gummipuffer 41 und 42 (zwei weitere Gummipuffer sind nicht zu erkennen) mit einer Wand 43 eines Außengehäuses 44 verbunden, indem die Gummipuffer 41 und 42 einerseits mit der Wand 43 und andererseits mit einem Flansch 46 des Zentralteils 40 verschraubt sind. Das Zentralteil 40 weist wiederum eine Aufnahme 47 für einen nicht dargestellten optischen Steckverbinder auf, dessen Überwurfmutter auf ein Gewinde 48 des Zentralteils 40 aufschraubbar ist. Im Zentralkörper 40 ist außerdem eine Linse 49 gehalten.

An der Wand 43 ist ein Mantelteil 50 durch Schrauben 51 befestigt. Dieses Mantelteil 50 weist zwei Bohrungen zur Aufnahme jeweils einer Differentialschraube auf, die jeweils um 90° versetzt über den Umfang verteilt angeordnet sind; in der Figur 2 ist nur eine Gewindebohrung 52 des Mantelteils 50 sichtbar, in die die eine Differentialschraube 53 eingeschraubt ist. Diese Differentialschraube 53 weist ein Außenteil 54, ein Mittenteil 55 und ein Innenteil 56 auf, die jeweils über Gewinde miteinander verbunden sind. An dem Innenteil 56 ist unten ein Flansch 57 angebracht, der über einen Stift 58 mit dem Außenteil 54 verbunden ist, das seinerseits wiederum fest in der Gewindebohrung 52 des Mantelteils 50 sitzt. Das Innenteil 56 ist ferner in seinem unteren Bereich mit einer Ausnehmung 59 versehen, in der eine Kugel 60 untergebracht ist. Diese Kugel 60 ist über eine Druckplatte 61 außen gegen den Flansch 46 des Zentralteils 40 gedrückt. Durch Drehung des Mittenteils 55 kann die Kugel 60 in ihrer Lage zur Stirnseite des Flansches 46 verändert werden, wobei diese Veränderung entgegen der Wirkung der von den Gummipuffern 41 und 42 ausgeübten Kraft erfolgt.

Das Mantelteil 50 weist darüberhinaus eine axiale Gewindebohrung 62 auf, in die ein Druckteil 63 mit Außengewinde einschraubbar ist. Zu diesem Zwecke ist am äußeren Umfang des Mantelteils 50 wiederum über etwa 90° ein Schlitz 65 vorgesehen, durch den in eine Ausnehmung 66 von mehreren über den Umfang des Druckteiles 63 verteilte Öffnungen eingegriffen werden kann und das Druckteil 63 gedreht werden kann. Das Druckteil 63 ist gegen eine Kugel 67 von weiteren nicht sichtbaren Kugeln gepreßt, die sich in einer Öffnung 68 des Mantelteils 50 befindet und über eine Druckplatte 69 seitlich auf den Flansch 46 des Zentralteils 40 einwirkt. Durch Betätigen des Druckteils 63 läßt sich somit das Zentralteil 40 entgegen der axialen Wirkung der Gummipuffer 41 und 42 in Richtung der Längsachse 70 des Zentralteils 40 verschieben.

Über einen Adapter 71 mit einer Aufnahme 72 für einen weiteren nicht dargestellten optischen Steckverbinder läßt sich letzterer mit dem dargestellten Kupplungselement verbinden, indem der Adapter 71 mittels einer Überwurfmutter 73 gegen einen Absatz 74 des Mantelteils 50 gedrückt wird. Ein Stift 75 wird dabei in einem in der Figur nicht erkennbaren (axialen) Längsschlitz im Mantelteil 50 geführt, wodurch eine Arretierung des Adapters 71 in Drehrichtung gegeben ist.

Sind an dem in Figur 2 dargestellten Kupplungselement zwei miteinander zu verbindende optische Steckverbinder mit jeweils einem in ihnen endenden Lichtwellenleiter angebracht, dann werden unter Messung der optischen Dämpfung im Bereich des Kupplungselementes bei abgenommener Gehäusekappe 76 das Druckteil 63, die Differentialschraube 53 und die nicht dargestellte weitere Differentialschraube so lange betätigt, bis das Zentralteil 40 mit der Linse 49 und dem an ihm befestigten einen optischen Steckverbinder in einer derartigen Lage bezüglich des über den Adapter 71 fest zugeordneten weiteren optischen Steckverbinders gebracht ist, daß eine minimale Dämpfung erreicht ist. Wenn dies der Fall ist, dann wird über eine Schraube 77 das Zentralteil 40 in seiner Lage arretiert. Anschließend wird dann die Gehäusekappe 76 aufgeschraubt und die Kupplung ist hergestellt.

**Patentansprüche**

1. Kupplungselement für optische Steckverbinder mit einer Linse, die im Innern des Kupplungselementes zwischen der Aufnahme für einen optischen Steckverbinder und der Aufnahme für einen weiteren optischen Steckverbinder liegt, **dadurch gekennzeichnet**, daß die Linse (6) in einem Zentralteil (3) untergebracht ist, das an seinem einen Ende die Aufnahme (7) für den einen optischen Steckverbinder aufweist und dort auch an dem Außengehäuse des Kupplungselementes in allen drei Richtungen auslenkbar mittels einer Federanordnung (9) gelagert ist, daß das Zentralteil (3) von einem Mantelteil (15) umfaßt ist, das Auslenkorgane (14) für das Zentralteil (3) trägt, und daß mit dem Mantelteil (15) ein Adapter (30) mit der Aufnahme (31) für den weiteren optischen Steckverbinder verbunden ist (Fig. 1).

2. Kupplungselement nach Anspruch 1, **dadurch gekennzeichnet**, daß die Federanordnung (9) aus zwei um 90° gegeneinander versetzt angeordneten, radial auf das Zentralteil (3) wirkenden Federn (11) und einem koaxial zur Längsachse (10) des Zentralteils (3) zwischen diesem und dem Außengehäuse (2) liegenden Federelement (12) besteht (Fig. 1).

3. Kupplungselement nach Anspruch 2, **dadurch gekennzeichnet**, daß die Federn (11) abgebogene Blattfedern sind, die das Zentralteil (3) außen umgreifen und über zwischengelegte Rollen (13) das Zentralteil (3) gegen radial wirkende Auslenkorgane (14) drücken (Fig. 1).

4. Kupplungselement nach Anspruch 2 oder 3, **dadurch gekennzeichnet**, daß die radial wirkenden Auslenkorgane Rollen (18) tragende Schrauben (19) sind, die in schwach zur Längsachse (10) des Zentralkörpers (3) geneigten Bohrungen (20) des Mantelteils (15) geführt sind (Fig. 1).

5. Kupplungselement nach Anspruch 1, **dadurch gekennzeichnet**, daß die Federanordnung aus mindestens einem zwischen dem Zentralkörper (40) und dem Außengehäuse (44) angeordneten federnden Element (41, 42) besteht, das in allen Richtungen Federeigenschaften aufweist.(Fig. 2)

6. Kupplungselement nach Anspruch 5, **dadurch gekennzeichnet**, daß ein einziges federndes Element als Gummiring koaxial zur Längsachse des Zentralkörpers angeordnet ist.

7. Kupplungselement nach Anspruch 5 oder 6, **dadurch gekennzeichnet**, daß die radial wirkenden Auslenkorgane Kugel (60) tragende Druckschrauben (53) sind, die in radial zum Zentralkörper (40) verlaufenden Gewindebohrungen (52) im Mantelteil (50) geführt sind (Fig. 2).

8. Kupplungselement nach Anspruch 7, **dadurch gekennzeichnet**, daß die Druckschrauben Differentialschrauben (53) sind (Fig. 2).

9. Kupplungselement nach einem der vorangehenden Ansprüche, **dadurch gekennzeichnet**, daß in eine koaxial zur Längsachse (10) des Zentralteils (3) verlaufende Gewindebohrung (24) des Mantelteils (15) ein Druckteil (25) mit Außengewinde als axial wirkendes Auslenkorgan eingeschraubt ist, das an einem Flansch (5) des Zentralteils (3) angreift und dieses gegen die Federanordnung (9) drückt (Fig. 1).

FIG.1

FIG.2

0228986

# EUROPÄISCHER RECHERCHENBERICHT

Nummer der Anmeldung

EP 86 73 0197

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 486 664 (THOMSON-CSF)<br><br>* Seite 2, Zeilen 16-27; Seite 3, Zeilen 4-32; Figuren 1,4,5 * | 1,2,5-7 | G 02 B 6/32<br>G 02 B 6/38 |
| A | GB-A-2 054 896 (PHILIPS) | | |

RECHERCHIERTE
SACHGEBIETE (Int. Cl.4)

G 02 B 6/00

Der vorliegende Recherchenbericht wurde für alle Patentansprüche erstellt.

| Recherchenort | Abschlußdatum der Recherche | Prüfer |
|---|---|---|
| BERLIN | 11-02-1987 | KEMSLEY E.E.K. |